# EUROPEAN PATENT APPLICATION

(11) **EP 4 084 398 A1**
(43) Date of publication of application: **02.11.2022**
(21) Application number: 19957373.4
(22) Date of filing: 26.12.2019
(51) Int. Cl.: H04L 9/32

(54) **TRANSMISSION CONTROL METHOD, TRANSMISSION CONTROL PROGRAM, AND INFORMATION PROCESSING DEVICE**

(71) Applicant: FUJITSU LIMITED, Kawasaki-shi, Kanagawa 211-8588 (JP)
(72) Inventor: YONEKURA, Yuki, Kawasaki-shi, Kanagawa 211-8588 (JP); TAKEUCHI, Takuma, Kawasaki-shi, Kanagawa 211-8588 (JP)
(74) Representative: Hoffmann Eitle
(86) International application number: PCT/JP2019/051156
(87) International publication number: WO 2021/130968

(57) **Abstract**

A transmission control method of a transaction stored in a block included in a blockchain in which a computer executes processing including, when receiving a reference request of the transaction, transmitting a verification request of the transaction to a node included in a blockchain network, and when receiving a verification result by the node, generating a verification block that stores the verification result, connecting the generated verification block to the blockchain, and controlling whether or not to transmit the transaction to a request source of the reference request on the basis of the verification result, and as a result, the transmission control method suppresses a processing load of the node included in the blockchain network.

## Description

### FIELD

The present invention relates to a transmission control method, a transmission control program, and an information processing device.

### BACKGROUND ART

A blockchain is a chain of beaded blocks that store one or more transactions (transaction content such that, for example, A sends 100 yen to B), and is distributed and managed by a plurality of nodes included in a P2P network (blockchain network). Note that, by including a hash value of a previous block in each block, it is difficult to tamper each block.

When a block that stores a new transaction is connected to a chain (hereinafter, the processing is referred to as "Write"), all the nodes included in the blockchain network verify the transaction. The verification is processing for mainly verifying a signature of a block creation node and verifying that input/output of the transaction is consistent with a current state of the node and occupies most of processing executed by the node.

On the other hand, when a transaction in any one block connected to the blockchain is referred (hereinafter, referred to as "Read"), generation of a new block and verification of the transaction are not performed.

### SUMMARY OF INVENTION

### TECHNICAL PROBLEM

However, in a case where all the nodes participating in the blockchain network verify the transaction each time of Write, for example, the following problems occur.
(1) In a case where a frequency of Write is higher than a frequency of Read (for example, object is to leave data in blockchain as trail), processing efficiencies of all the nodes are poor (high processing load).
(2) In some cases, data that is not Read is verified, which is inefficient.

Therefore, in one aspect, an object is to suppress a processing load of a node included in a blockchain network.

### SOLUTION TO PROBLEM

In one proposal, a transmission control method of a transaction stored in a block included in a blockchain is a transmission control method in which a computer executes processing including, when receiving a reference request of the transaction, transmitting a verification request of the transaction to a node included in a blockchain network, and when receiving a verification result by the node, generating a verification block that stores the verification result, connecting the generated verification block to the blockchain, and controlling whether or not to transmit the transaction to a request source of the reference request on the basis of the verification result.

### ADVANTAGEOUS EFFECTS OF INVENTION

According to one aspect, it is possible to suppress a processing load of a node included in a blockchain network.

### BRIEF DESCRIPTION OF DRAWINGS

FIG. 1 is a diagram illustrating an exemplary configuration of a transaction management system 1 according to an embodiment of the present invention.
FIG. 2 is a diagram illustrating an exemplary hardware configuration of each node included in the transaction management system 1 according to the embodiment of the present invention.
FIG. 3 is a diagram illustrating an exemplary functional configuration of the transaction management system 1 according to the embodiment of the present invention.
FIG. 4 is a sequence diagram for explaining an example of a processing procedure executed by the transaction management system 1 at the time of Write.
FIG. 5 is a diagram illustrating an exemplary configuration of a state DB 27.
FIGs. 6A and 6B illustrate a sequence diagram for explaining an example of a processing procedure executed by the transaction management system 1 at the time of Read.
FIG. 7 is a diagram illustrating an example of a blockchain connected to verification blocks.

### DESCRIPTION OF EMBODIMENTS

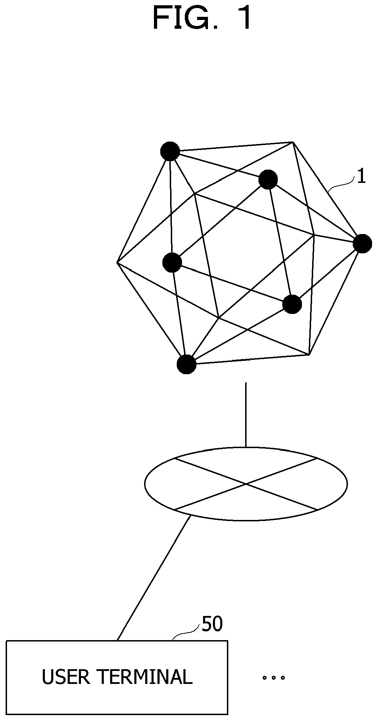

Hereinafter, an embodiment of the present invention will be described with reference to the drawings. FIG. 1 is a diagram illustrating an exemplary configuration of a transaction management system 1 according to the embodiment of the present invention. In FIG. 1, a plurality of user terminals 50 is connected to the transaction management system 1 via a network such as the Internet.

The user terminal 50 is a terminal used by a party of various transactions (hereinafter, referred to as "transaction") such as remittance. For example, a personal computer (PC), a smartphone, a tablet terminal, or the like may also be used as the user terminal 50.

The transaction management system 1 is a P2P network (blockchain network) that manages transactions performed between the user terminals 50 and includes a plurality of computers or a set of information processing devices (node) to which the distributed ledger technology is applied. Each node is connected by the blockchain network, and includes a storage unit (hereinafter, referred to as "ledger") that distributes and manages common ledger information. A blockchain indicating a history of transactions is recorded in the ledger. In the present embodiment, processing for connecting (adding) a new block to a blockchain recorded in a ledger is called "Write", and processing for referring to a transaction in any one block connected to the blockchain is called "Read".

In the present embodiment, by verifying transactions at the time of Read, not at the time of Write, the transaction management system 1 can efficiently and reliably verify the transaction while reducing resources used for the verification of the transaction. Note that, in order to remarkably obtain the effect, it is preferable that a frequency of Write to the blockchain be relatively higher than a frequency of Read in the transaction management system 1.

Furthermore, as the transaction management system 1, a consortium-type blockchain (for example, Hyperledger Fabric or the like), with a node participation permission system, in which a blockchain is not branched is preferable.

Furthermore, it is assumed that the transaction management system 1 have the following mechanism related to a traditional blockchain.
- A mechanism for deploying, sharing, and executing smart contracts in a single or a plurality of nodes.
- A mechanism for generating and referring to transactions via the smart contract.
- A mechanism in which a node that is activated or reactivated from the middle shares a blockchain to the latest block.
- A mechanism in which a node that generates a transaction distributes a block including the transaction to all nodes (block order is guaranteed with any method).

Moreover, the transaction management system 1 has the following four functions.

### (1) [Transaction generation and writing function]

When a node that generates a transaction using a smart contract or the like generates and distributes blocks to all nodes participating in a blockchain network, each node that has received the block Writes the block without verifying the transaction. Furthermore, information used to refer to the transaction (information for specifying transaction such as transaction ID) is stored in a database in the node.

### (2) [Transaction reference function]

When the node that refers to the transaction using the smart contract or the like distributes the transaction to all the nodes participating in the blockchain network, including the node itself, and requests all the nodes to verify the transaction, each node that has received the request verifies the transaction and returns a verification result and a signature for the verification. Furthermore, the verification results and the signatures of all the nodes collected by the node that has referred to the transaction are stored in a block (hereinafter, referred to as "verification block"), and the verification block is distributed to all the nodes. Note that the verification block stores a hash value of a previous block, a hash value of a transaction to be verified, or the like.

### (3) [Dependent transaction reference and verification function]

Immediately after the transaction is generated using the smart contract or the like regarding the transaction generation and writing function in (1), the transaction reference function in (2) is executed on a past transaction on which the generated transaction depends.

### (4) [Cache function of transaction verification result]

Regarding the transaction reference function in (2), a verification result of the transaction that is referred (read) once is cached in the database in the node. When the transaction is referred, the verification result of the referred transaction is searched from the database in the node, and in a case where the verification result does not exist, the transaction is verified.

For example, in the present embodiment, at the time of Writing the transaction generated by executing the smart contract, the transaction is not verified, and the block that stores the transaction is distributed to all the nodes. However, in a case where the transaction to be Written depends on the past transaction (for example, in a case where transaction to be Written is transaction for monetary transaction depending on past balance or the like), Read of the past transaction is executed. Furthermore, at the time of Reading the transaction, the node that has referred to the transaction by executing the smart contract requests all the nodes to verify the transaction, collects verification results and signatures, and stores the verification results and the signatures in the verification block, and distributes the verification block to all the nodes. At this time, the verification result is cached in the database in the node. Therefore, at the time of Reading the transaction, in a case where the verification result is cached in the database in the node, the processing on and after the request for the transaction verification is not executed, and the generation of the verification block is suppressed.

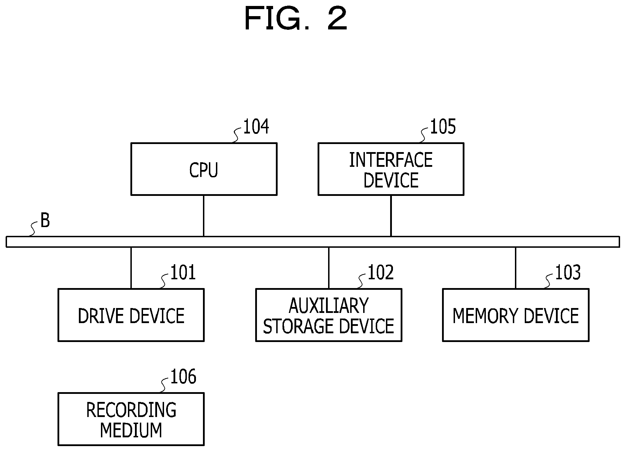

FIG. 2 is a diagram illustrating an exemplary hardware configuration of each node included in the transaction management system 1 according to the embodiment of the present invention. As illustrated in FIG. 2, each node has a drive device 101, an auxiliary storage device 102, a memory device 103, a CPU 104, an interface device 105, and the like, which are mutually connected to each other by a bus B.

A program that implements processing in the node is provided by a recording medium 106. The recording medium 106 recording the program is set in the drive device 101, and then, the program is installed in the auxiliary storage device 102 from the recording medium 106 via the drive device 101. However, the program does not have to be necessarily installed from the recording medium 106, and the program may also be downloaded from another computer via the network. The auxiliary storage device 102 stores the installed program and also stores files, data, and the like that are needed.

The memory device 103 reads the program from the auxiliary storage device 102 and stores the program in a case where an instruction to activate the program is issued. The CPU 104 executes a function related to the node according to the program stored in the memory device 103. The interface device 105 is used as an interface connected to the network.

Note that, as an example of the recording medium 106, a portable recording medium such as a CD-ROM, a DVD disc, or a USB memory may be given. Furthermore, as an example of the auxiliary storage device 102, a hard disk drive (HDD), a flash memory, or the like may be given. Both the recording medium 106 and the auxiliary storage device 102 correspond to a computer-readable recording medium.

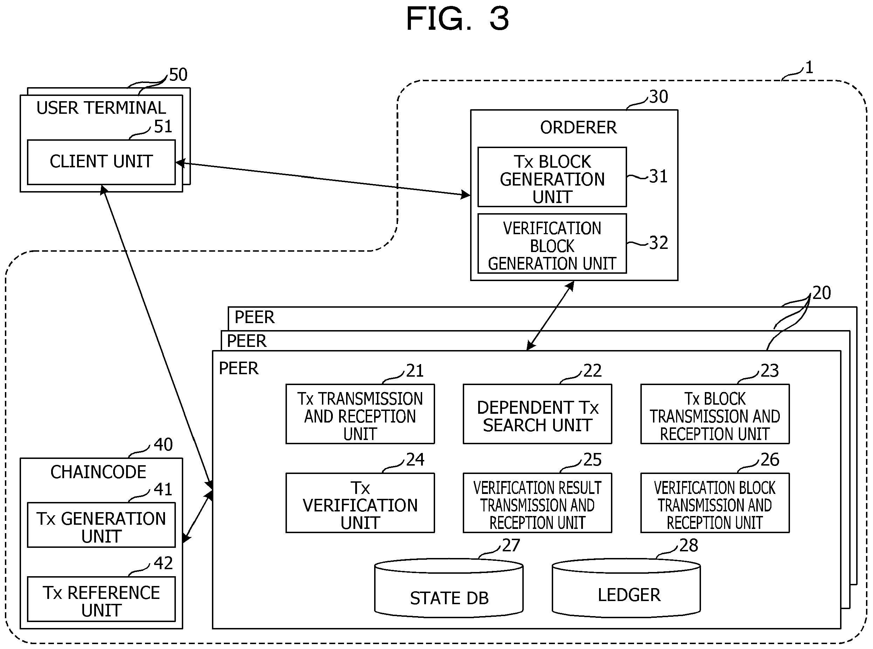

FIG. 3 is a diagram illustrating an exemplary functional configuration of the transaction management system 1 according to the embodiment of the present invention. For convenience, in the present embodiment, an example will be described in which the transaction management system 1 is based on a consortium-type blockchain platform "Hyperledger Fabric". However, other blockchain platforms may also be adopted.

In FIG. 3, the transaction management system 1 includes a plurality of nodes that functions as a peer 20, a single node that functions as an orderer 30, and a single node that functions as a chaincode 40. Here, the node is one or a plurality of computers. However, the transaction management system 1 may also include the plurality of orderers 30 and the plurality of chaincodes 40.

The orderer 30 is a node that generates a block and distributes the block to each peer 20. In FIG. 3, the orderer 30 includes a Tx block generation unit 31, a verification block generation unit 32, and the like. Each of these units is implemented by processing that one or more programs installed in the orderer 30 cause the CPU 104 of the orderer 30 to execute.

The Tx block generation unit 31 generates a block (hereinafter, referred to as "Tx block") including data regarding a transaction (hereinafter, referred to as "transaction data"). The verification block generation unit 32 generates a verification block.

The peer 20 distributes and manages the common ledger information in which the blockchain is recorded. The peer 20 receives a transaction Write request or a transaction Read request from the user terminal 50 and controls processing in response to these requests. In FIG. 3, the peer 20 includes a Tx transmission and reception unit 21, a dependent Tx search unit 22, a Tx block transmission and reception unit 23, a Tx verification unit 24, a verification result transmission and reception unit 25, a verification block transmission and reception unit 26, and the like. Each of these units is implemented by processing that one or more programs installed in the peer 20 cause the CPU 104 of the peer 20 to execute. The peer 20 also uses the storage unit such as the state DB 27, a ledger 28, or the like. Each of these storage units can be implemented using, for example, the auxiliary storage device 102, a storage device that can be connected to the peer 20 via a network, or the like.

The Tx transmission and reception unit 21 receives the Write request or the Read request from the user terminal 50 and controls processing in response to these requests.

The dependent Tx search unit 22 searches the state DB 27 for a transaction on which a transaction that is a Write request target depends (dependent destination of the transaction). The state DB 27 stores data related to each transaction. In the present embodiment, the state DB 27 is also used as a storage unit that caches the verification result of each transaction. Note that the WorldState or the like may also be used as the state DB 27.

The Tx block transmission and reception unit 23 receives a Tx block generated by the Tx block generation unit 31 from the Tx block generation unit 31 and records the Tx block in the ledger 28 and transmits a notification indicating confirmation of the Tx block to the user terminal 50 that is a Write request source. The ledger 28 is a storage unit that stores a blockchain.

The Tx verification unit 24 verifies an unverified transaction among a transaction to be Read and a transaction on which a transaction to be Written depends.

The verification result transmission and reception unit 25 receives a verification result of the transaction from the Tx verification unit 24 and transmits a request for generating a verification block that stores the verification result to the verification block generation unit 32.

The verification block transmission and reception unit 26 receives a verification block generated by the verification block generation unit 32 from the verification block generation unit 32 and records the verification block in the ledger 28 and transmits a notification indicating confirmation of the verification block to the user terminal 50 that is a Read request source.

The chaincode 40 is a node in which a smart contract is implemented. In FIG. 3, the chaincode 40 includes a Tx generation unit 41, a Tx reference unit 42, and the like. Each of these units is implemented by processing that one or more programs (smart contract) installed in the chaincode 40 cause the CPU 104 of the chaincode 40 to execute.

The Tx generation unit 41 generates transaction data of a transaction to be Written. The Tx reference unit 42 searches the state DB 27 for transaction data of a transaction to be Read.

Note that the user terminal 50 includes a client unit 51. The client unit 51 is implemented by processing that one or more programs installed in the user terminal 50 (for example, application program corresponding to transaction management system 1) cause the CPU of the user terminal 50 to execute.

The client unit 51 transmits various requests (request) to the transaction management system 1 and receives responses (response) to the requests.

Note that, in FIG. 3, an example is illustrated in which the nodes are classified into the orderer 30, the chaincode 40, and the peer 20. However, depending on the blockchain platform to be adopted, all or some peers 20 may also have the function of the orderer 30 or the chaincode 40. For example, a configuration may be adopted in which the orderer 30, the chaincode 40, and the peer 20 are not distinguished from each other.

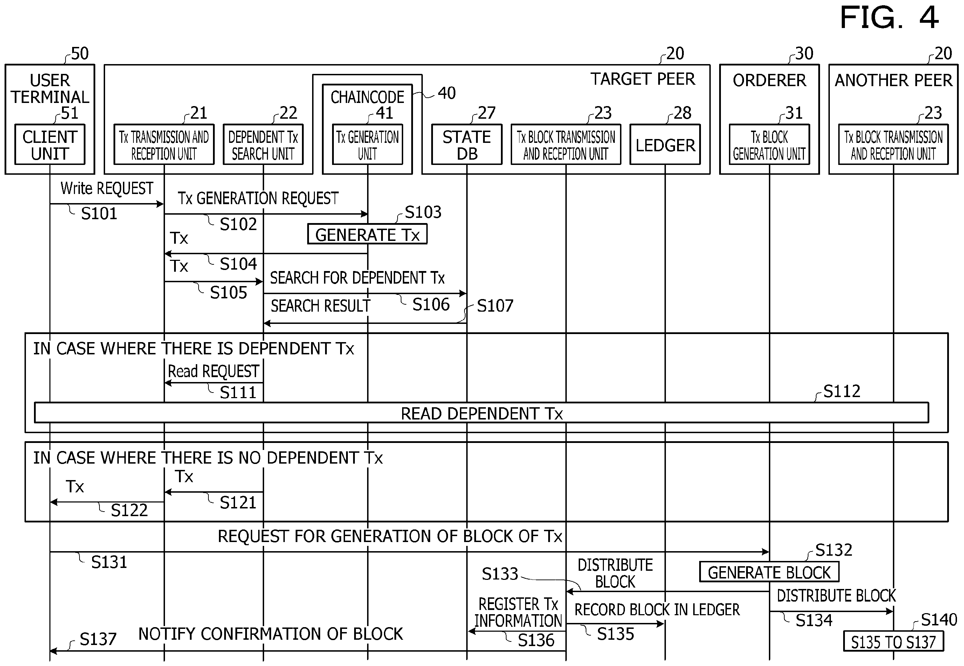

Hereinafter, a processing procedure executed by the transaction management system 1 will be described. FIG. 4 is a sequence diagram for explaining an example of a processing procedure executed by the transaction management system 1 at the time of Write.

In step S101, the client unit 51 of the user terminal 50 transmits a Write request of a certain transaction (hereinafter, referred to as "target transaction") to a single peer 20 (hereinafter, referred to as "target peer 20"). The Write request includes transaction information (for example, remittance source, remittance destination, remittance amount, or the like) indicating content of the target transaction.

Upon receiving the Write request, the Tx transmission and reception unit 21 of the target peer 20 transmits a request for generating transaction data of the target transaction (hereinafter, referred to as "target Tx") to the Tx generation unit 41 of the chaincode 40 (S102). The generation request includes the transaction information of the target transaction.

The Tx generation unit 41 executes the smart contract (chaincode) in response to the generation request and generates the target Tx (S103) and transmits a response including the target Tx to the Tx transmission and reception unit 21 of the target peer 20 (S104). Note that the target Tx includes a transaction ID (hereinafter, referred to as "Tx ID") that is an identifier of the target transaction, the transaction information, an identifier regarding a target of the target transaction (hereinafter, referred to as "key"), or the like. A value to be the key is, for example, "an account number of the A's bank account" or the like.

Upon receiving the response from the Tx generation unit 41, the Tx transmission and reception unit 21 transmits the target Tx included in the response to the dependent Tx search unit 22 of the target peer 20 (S105). Upon receiving the target Tx, the dependent Tx search unit 22 refers to the state DB 27 and determines whether or not there is another transaction on which the target transaction depends (S106 and S107).

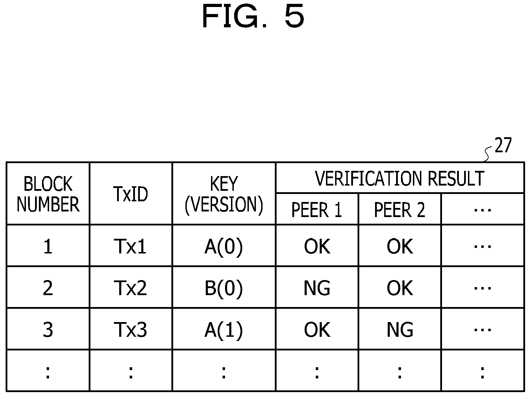

FIG. 5 is a diagram illustrating an exemplary configuration of the state DB 27. As illustrated in FIG. 5, the state DB 27 stores a block number, a Tx ID, a key (version), a verification result, or the like for each transaction.

The block number is a number of a Tx block that stores transaction data. The Tx ID is an identifier of a transaction. The key (version) is a key of the transaction and a version of the key. In FIG. 5, a value of the key is abstracted and expressed as one alphabet letter. The version of the key is incremented each time when the transaction related to the same key is executed (in example in FIG. 5, one is added). The verification result is a verification result for each peer 20 that has verified the transaction.

In steps S106 and S107, the dependent Tx search unit 22 searches for a record including a key same as the key of the target Tx and determines whether or not the record is stored in the state DB 27. In a case where the corresponding record is stored, the dependent Tx search unit 22 determines that there is transaction data of the transaction on which the target Tx depends (hereinafter, referred to as "dependent Tx"), and in a case where the record is not stored, the dependent Tx search unit 22 determines that there is no dependent Tx. Note that, according to the example in FIG. 5, a value of a key included in an existing record is "A" or "B". Therefore, if the value of the key of the target Tx is "A" or "B", in a case where it is determined that there is the dependent Tx, and in a case where the value of the key is neither "A" nor "B", it is determined that there is no dependent Tx.

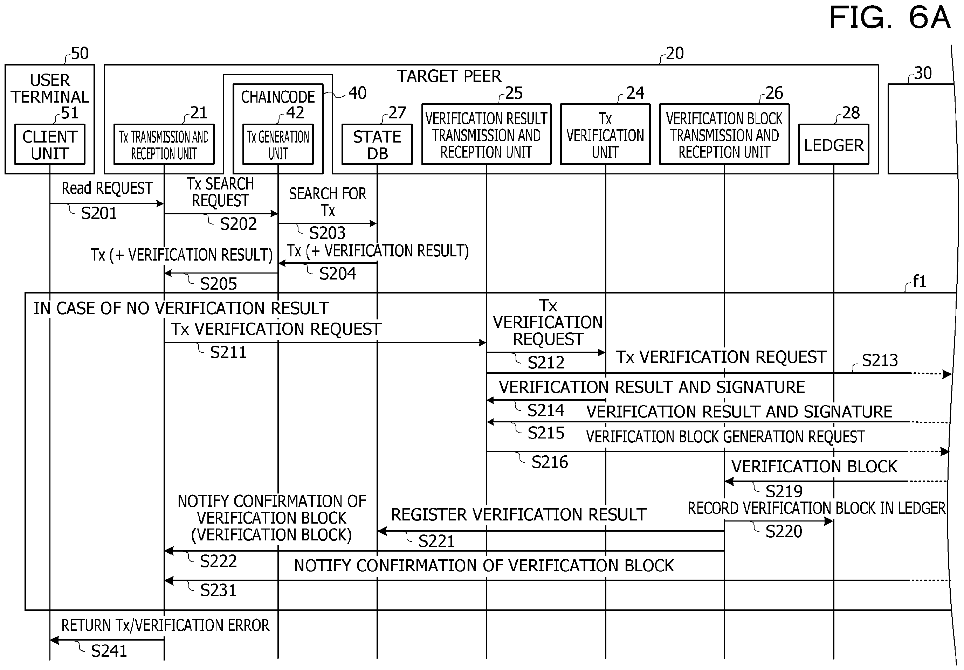

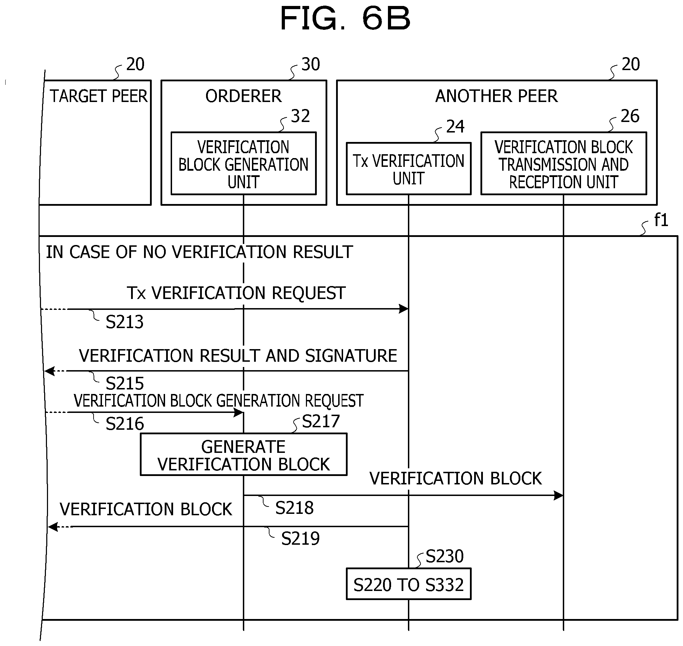

In a case where it is determined that there is the dependent Tx, the dependent Tx search unit 22 transmits a dependent Tx Read request to the Tx transmission and reception unit 21 of the target peer (S111). The Read request includes, for example, a Tx ID of the dependent Tx. Subsequently, dependent Tx Read processing is executed (S112). The Read processing is the same as processing f1 (steps S211 to S231) in FIG. 6 to be described later except for that a Read target is the dependent Tx. Note that, in a case where the dependent Tx is successfully verified in step S112 (in a case where verification results of all peers 20 are OK), the target Tx is transmitted to the client unit 51 that is the transmission source of the Write request in step S101, and in a case where the verification fails (in a case where verification results of one or more peers 20 are not OK), information indicating a verification error is transmitted to the client unit 51.

On the other hand, in a case where it is determined that there is no dependent Tx, the dependent Tx search unit 22 transmits the target Tx generated in step S103 to the Tx transmission and reception unit 21 of the target peer 20 (S121). The Tx transmission and reception unit 21 transmits the target Tx to the client unit 51 that is the transmission source of the Write request in step S101 (S122).

In a case where the target Tx is received in step S112 or subsequent to step S122, the client unit 51 transmits a request for generating a block that stores the target Tx to the Tx block generation unit 31 of the orderer 30 (S131). The generation request includes the target Tx. Upon receiving the generation request, the Tx block generation unit 31 generates a Tx block that stores the target Tx included in the generation request (hereinafter, referred to as "target Tx block") (S132) and distributes (transmit) the target Tx block to the Tx block transmission and reception unit 23 of each peer (S133 and S134). The target Tx block includes a block number of the target Tx or the like.

The Tx block transmission and reception unit 23 of the target block records the target Tx block in the ledger 28 of the target peer 20 (S135). For example, the target Tx block is connected to the blockchain recorded in the ledger 28. At this time, the target Tx is not verified. Subsequently, the Tx block transmission and reception unit 23 registers a record including the transaction data of the target Tx in the state DB 27 (S136). Specifically, a record including a block number of the target Tx block, a Tx ID of the target Tx, a key of the target Tx, and a version of the key is registered in the state DB 27. Here, as the version of the key, in a case where there is a dependent Tx, a value obtained by adding one to the last version of the dependent Tx is registered, and in a case where there is no dependent Tx, zero is registered. Note that, at this point, a verification result regarding the target Tx is not registered. This is because the target Tx is not verified at the time of Write.

Subsequently, the Tx block transmission and reception unit 23 transmits a notification indicating that the target Tx block is confirmed (connected to blockchain) to the client unit 51 that is the transmission source of the Write request (S137).

Note that the Tx block transmission and reception unit 23 of each of the peers 20 other than the target peer 20 executes processing same as that in steps S135 to S137 in response to the reception of the target Tx block (S140). Therefore, each of the other peers 20 transmits the notification indicating that the target Tx block is confirmed to the client unit 51.

FIG. 6(i.e., FIGs. 6A and 6B) is a sequence diagram for explaining an example of a processing procedure executed by the transaction management system 1 at the time of Read.

In step S201, the client unit 51 of the user terminal 50 transmits a Read request (reference request) of a certain transaction (hereinafter, referred to as "target transaction") to a single peer 20 (hereinafter, referred to as "target peer 20"). The Read request includes target transaction specification information (for example, Tx ID or the like).

Upon receiving the Read request, the Tx transmission and reception unit 21 of the target peer 20 specifies the specification information and transmits a request for searching for the transaction data of the target transaction to the Tx reference unit 42 of the target peer 20 (S202). Upon receiving the search request, the Tx reference unit 42 executes the smart contract (chaincode) and searches the state DB 27 for the record regarding the specification information specified in the search request (S203) and acquires the block number, the Tx ID, and the key (version) (hereinafter, data including these is referred to as "target Tx") recorded in the record and a verification result (S204). The Tx reference unit 42 transmits a search result including the acquired target Tx and verification result to the Tx transmission and reception unit 21 of the target peer 20 (S205).

Subsequently, upon receiving the search result, the Tx transmission and reception unit 21 determines whether or not the verification result included in the search result is empty (for example, whether or not verification result exists). Alternatively, in a case where the verification result is empty, it is sufficient that the verification result be not included in the search result. In this case, it is sufficient that it be literally determined whether or not the verification result exists. Note that the determination regarding whether or not the verification result of the target Tx (target transaction) exists is equivalent to the determination regarding whether or not the verification block associated with the target transaction exists. This is because, as described later, when the target transaction is verified, the verification block is associated with the target transaction and is recorded in the ledger 28. In other words, in steps S203 and S204, it may also be determined whether or not the verification block is included in the blockchain recorded in the ledger 28. However, the speed of the determination can be increased by using the state DB 27.

In a case where there is no verification result (for example, in a case where verification block associated with target transaction is not included in ledger 28), the processing f1 (steps S211 to S231) is executed.

In step S211, the Tx transmission and reception unit 21 transmits a target Tx verification request to the verification result transmission and reception unit 25 of the target peer 20. The verification request includes the target Tx. In response to the verification request, the verification result transmission and reception unit 25 transmits the verification request to the Tx verification units 24 of all the peers 20 including the target peer 20 (S212 and S213).

The Tx verification unit 24 of each peer 20 that has received the verification request verifies the target Tx according to a predetermined algorithm and transmits a "OK" or "not OK" that is a verification result (information indicating whether or not verification is succeeded (target Tx is correct or not)) and a signature for the verification result to the verification result transmission and reception unit 25 of the target peer 20 (S214 and S215).

When receiving (collecting) the verification results and the signatures from the Tx verification units 24 of all the peers 20, the verification result transmission and reception unit 25 of the target peer 20 transmits the verification block generation request to the verification block generation unit 32 of the orderer 30 (S216). The generation request includes verification results and signatures of all the peers 20.

In response to the generation request, the verification block generation unit 32 generates a verification block including all the verification results and signatures included in the generation request (S217). At this time, the verification block generation unit 32 stores preHash (= hash value of previous block in blockchain) and preTx (= Tx ID of target Tx) in a block header of the verification block. For example, by including the Tx ID of the target Tx in the block header of the verification block, the verification block generation unit 32 associates the verification block with the target transaction at the time when the verification block is connected to the blockchain (along connection). Subsequently, the verification block generation unit 32 transmits (distributes) the verification block to the verification block transmission and reception units 26 of all the peers 20 including the target peer 20 (S218 and S219).

Upon receiving the verification block, the verification block transmission and reception unit 26 of the target peer 20 records the verification block in the ledger 28 of the target peer 20 (S220). For example, the verification block transmission and reception unit 26 connects the verification block to the blockchain recorded in the ledger 28.

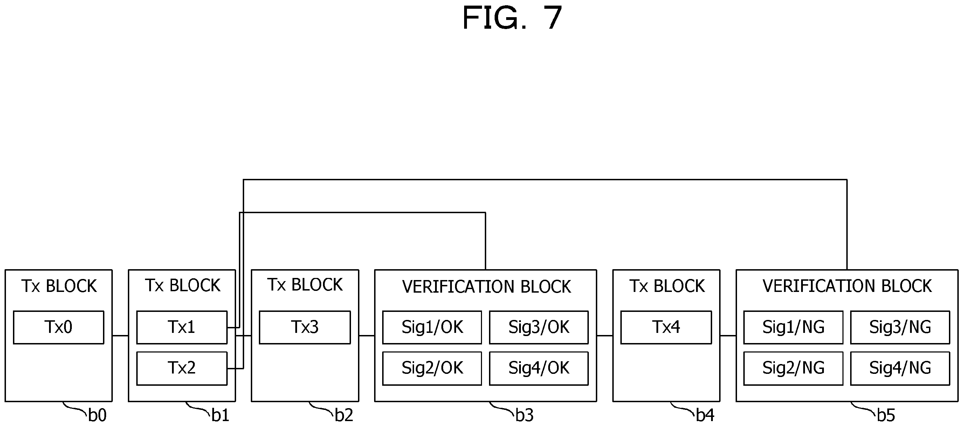

FIG. 7 is a diagram illustrating an example of a blockchain connected to a verification block. FIG. 7 illustrates a blockchain including blocks b0 to b5 recorded in the ledger 28. Of these, the blocks b0, b1, b2, and b4 are Tx blocks, and the blocks b3 and b5 are verification blocks. For example, the block b3 is a verification block corresponding to transaction data Tx1 stored in the block b1. The block b5 is a verification block corresponding to transaction data Tx2 stored in the block b1. For example, in a case where the target Tx is Tx2, in step S220, the block b5 is connected to the blockchain.

Subsequently, the verification block transmission and reception unit 26 registers the verification result included in the verification block (for example, verification result of target Tx by all peers 20) in the verification result of the record corresponding to the target Tx in the state DB 27 of the target peer 20 (record including Tx ID of target Tx) (S221). As a result, the verification result of the target transaction is cached in the state DB 27. Subsequently, the verification block transmission and reception unit 26 transmits the verification block and a notification of confirmation of the verification block to the Tx transmission and reception unit 21 of the target peer 20 (S222).

Note that, in response to the reception of the verification block, the verification block transmission and reception unit 26 of each peer 20 other than the target peer 20 executes processing same as that in steps S220 and S221 (S230). Subsequently, the verification block transmission and reception unit 26 of each peer 20 transmits the notification of the confirmation of the verification block to the Tx transmission and reception unit 21 of the target peer 20 (S231). Note that, in step S231, the verification block does not need to be transmitted.

When receiving the notification of the confirmation of the verification block from the verification block transmission and reception units 26 of all the peers 20, the Tx transmission and reception unit 21 of the target peer 20 executes step S241 using the verification results of all the peers 20 included in the verification block received from the verification block transmission and reception unit 26 of the target peer 20 as a processing target.

On the other hand, in a case where the verification result is included in the search result from the Tx reference unit 42 in step S205 (for example, in a case where verification block of target transaction is included in ledger 28), the Tx transmission and reception unit 21 of the target peer 20 does not execute step S211. As a result, the processing f1 (steps S211 to S231) is not executed, and step S241 is executed on the verification result as a processing target. For example, in a case where the verification block of the target transaction is included in the ledger 28, the Tx transmission and reception unit 21 suppresses generation of the verification block of the target transaction.

In step S241, the Tx transmission and reception unit 21 of the target peer 20 controls whether or not to transmit the target Tx to the transmission source of the Read request (request source) on the basis of the processing target search result. Specifically, in a case where the search result indicates that the verification results of all the peers 20 are OK, the Tx transmission and reception unit 21 transmits the target Tx to the client unit 51 that is the Read request transmission source (S241). On the other hand, in a case where the search result indicates that the verification results of one or more peers 20 are not OK (target Tx is invalid), the Tx transmission and reception unit 21 transmits a verification error message to the client unit 51 (S241).

As described above, according to the present embodiment, the transaction is verified at the time of referring to the transaction, not at the time of registration of the transaction (at the time of connection to blockchain of block that stores the transaction). Therefore, it is possible to reduce the number of transactions to be verified to be the same as the number of transactions to be referred, and as a result, it is possible to suppress a processing load of the node included in the blockchain network.

For example, in a case of the blockchain platform "Hyperledger Fabric", a time needed for verification is about 20% of a time needed for Write. Therefore, it can be expected to reduce about 20% of the processing time for Write.

Furthermore, for example, in a case of a P2P power transaction once in 30 minutes, Write (value record of power meter) is about one transaction / min, and Read (reference power amount at the time of power transaction) is one transaction / 30 min. Because 1/30 of the total data amount is Read by simple calculation, it can be expected to reduce about 97% of resources (time and data amount) spent on the verification as a whole.

Furthermore, according to the present embodiment, because another transaction related to the transaction (dependent transaction) is Read at a stage prior to Writing of the transaction (immediately after node executes smart contract), even in a case where a transaction to be Written depends on the past transaction, it can be guaranteed that the past transaction is valid.

Furthermore, according to the present embodiment, when the verification result of the transaction that has been Read once is cached in the database (state DB 27) in the node and it is requested to Read the transaction verified in the past, the verification is suppressed on the basis of the cache. Therefore, it is possible to avoid redundantly verifying the same transaction.

Although the embodiment of the present invention have been described in detail above, the embodiments are not limited thereto, and various modifications and alternations may be made within the scope of the gist of the present invention described in the claims.

### CITATION LIST

### PATENT DOCUMENT

Patent Document 1: Japanese Laid-open Patent Publication No. 2018-128723

### REFERENCE SIGNS LIST

1transaction management system
20peer
21Tx transmission and reception unit
22dependent Tx search unit
23Tx block transmission and reception unit
24Tx verification unit
25verification result transmission and reception unit
26verification block transmission and reception unit
27state DB
28ledger
30orderer
31Tx block generation unit
32verification block generation unit
40chaincode
41Tx generation unit
42Tx reference unit
50user terminal
51client unit
101drive device
102auxiliary storage device
103memory device
104CPU
105interface device
106recording medium
Bbus

## Claims

1. A transmission control method implemented by a computer of controlling a transaction stored in a block included in a blockchain, the transmission control method comprising:
in response to receiving a reference request of the transaction, transmitting a verification request of the transaction to a node included in a blockchain network; and
in response to receiving a verification result by the node,
generating a verification block that stores the verification result,
connecting the generated verification block to the blockchain, and
controlling, on the basis of the verification result, whether or not to transmit the transaction to a request source of the reference request.

2. The transmission control method according to claim 1, wherein
the controlling of the transmitting is configured to associate the verification block with the transaction at the time when the verification block is connected to the blockchain.

3. The transmission control method according to claim 2, wherein
the transmitting of the verification request is configured to
determine, in response to receiving the reference request of the transaction, whether or not the verification block associated with the transaction is included in the blockchain, and
in a case where the verification block is included, suppress the generating of the verification block.

4. The transmission control method according to claim 3, wherein
the controlling of the transmitting is configured to
in a case where the verification block is included in the blockchain, control, on the basis of the verification result stored in the verification block, whether or not to transmit the transaction to the request source of the reference request.

5. The transmission control method according to any one of claims 1 to 4, further comprising:
transmitting the generated verification block to a node included in the blockchain network.

6. A transmission control program of controlling a transaction stored in a block included in a blockchain, the transmission control program comprising instructions which, when the transmission control program is executed by a computer, cause the computer to perform processing, the processing comprising:
in response to receiving a reference request of the transaction, transmitting a verification request of the transaction to a node included in a blockchain network; and
in response to receiving a verification result by the node,
generating a verification block that stores the verification result,
connecting the generated verification block to the blockchain, and
controlling, on the basis of the verification result, whether or not to transmit the transaction to a request source of the reference request.

7. The transmission control program according to claim 6, wherein
the controlling of the transmitting is configured to associate the verification block with the transaction at the time when the verification block is connected to the blockchain.

8. The transmission control program according to claim 7, wherein
the transmitting of the verification request is configured to
determine, in response to receiving the reference request of the transaction, whether or not the verification block associated with the transaction is included in the blockchain, and
in a case where the verification block is included, suppress the generating of the verification block.

9. The transmission control program according to claim 8, wherein
the controlling of the transmitting is configured to
in a case where the verification block is included in the blockchain, control, on the basis of the verification result stored in the verification block, whether or not to transmit the transaction to the request source of the reference request.

10. The transmission control program according to any one of claims 6 to 9, the processing further comprising:
transmitting the generated verification block to a node included in the blockchain network.

11. An information processing apparatus of controlling a transaction stored in a block included in a blockchain, the information processing apparatus comprising:
a first transmission unit that transmit, in response to receiving a reference request of the transaction, a verification request of the transaction to a node included in a blockchain network; and
a control unit that performs, in response to receiving a verification result by the node:
generating a verification block that stores the verification result,
connecting the generated verification block to the blockchain, and
controlling, on the basis of the verification result, whether or not to transmit the transaction to a request source of the reference request.

12. The information processing apparatus according to claim 11, wherein the control unit associates the verification block with the transaction at the time when the verification block is connected to the blockchain.

13. The information processing apparatus according to claim 12, wherein
the first transmission unit performs, in response to receiving the reference request of the transaction:
determining whether or not the verification block associated with the transaction is included in the blockchain, and
in a case where the verification block is included, suppressing the generating of the verification block.

14. The information processing apparatus according to claim 13, wherein the control unit performs, in a case where the verification block is included in the blockchain:
controlling, on the basis of the verification result stored in the verification block, whether or not to transmit the transaction to the request source of the reference request.

15. The information processing apparatus according to any one of claims 11 to 14, the information processing apparatus further comprising:
a second transmission unit that transmits the generated verification block to a node included in the blockchain network.
